(19) Europäisches Patentamt
European Patent Office
Office européen des brevets

(11) EP 2 044 130 B1

(12) EUROPÄISCHE PATENTSCHRIFT

(45) Veröffentlichungstag und Bekanntmachung des Hinweises auf die Patenterteilung:
**21.04.2010 Patentblatt 2010/16**

(21) Anmeldenummer: **07787351.1**

(22) Anmeldetag: **11.07.2007**

(51) Int Cl.:
***C08F 2/24*** (2006.01) ***C09D 133/00*** (2006.01)

(86) Internationale Anmeldenummer:
**PCT/EP2007/057077**

(87) Internationale Veröffentlichungsnummer:
**WO 2008/009596 (24.01.2008 Gazette 2008/04)**

# (54) VERWENDUNG WÄSSRIGER KOMPOSITPARTIKEL-DISPERSIONEN ALS BINDEMITTEL IN HOLZBESCHICHTUNGEN

USE OF AQUEOUS COMPOSITE PARTICLE DISPERSIONS AS BINDING AGENTS IN COATINGS FOR TIMBER

UTILISATION DE DISPERSIONS AQUEUSES DE PARTICULES COMPOSITES COMMES LIANTS DANS DES REVETEMENTS POUR LE BOIS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.07.2006 EP 06117323**

(43) Veröffentlichungstag der Anmeldung:
**08.04.2009 Patentblatt 2009/15**

(73) Patentinhaber: **BASF SE**
**67056 Ludwigshafen (DE)**

(72) Erfinder:
- **TIARKS, Franca**
  **67061 Ludwigshafen (DE)**
- **WIESE, Harm**
  **69514 Laudenbach (DE)**

(56) Entgegenhaltungen:
**WO-A-2006/072464**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 044 130 B1

## Beschreibung

Gegenstand der vorliegenden Erfindung ist die Verwendung einer wässrigen Dispersion von aus Polymerisat und feinteiligem anorganischem Feststoff aufgebauten Partikeln (wässrige Kompositpartikel-Dispersion) als Bindemittel in Holzbeschichtungsformulierungen, wobei bei der Herstellung der wässrigen Kompositpartikel-Dispersion ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes mit einem mittleren Teilchendurchmesser ≤ 100 nm und wenigstens eines Dispergiermittels nach der Methode der radikalisch wässrigen Emulsionspolymerisation polymerisiert werden, und wobei als ethylenisch ungesättigte Monomere eine Monomerenmischung eingesetzt wird, welche aus ethylenisch ungesättigten Monomeren A und zu > 0 und ≤ 10 Gew.-% wenigstens eines, eine Epoxidgruppe aufweisenden ethylenisch ungesättigten Monomeren B (Epoxidmonomer) besteht.

Die Verwendung wässriger Kompositpartikel-Dispersionen als Bindemittel in Holzbeschichtungsformulierungen ist dem Fachmann bekannt (siehe beispielweise J. Leuninger et al., Farbe & Lack (110), 10, 2004, Seiten 30 bis 38). Insbesondere werden Kompositpartikel-Dispersionen in Holzbeschichtungsformulierungen eingesetzt, wenn ein ausgewogenes Verhältnis zwischen der Härte der Beschichtung, welche eine frühe Blockfestigkeit der Beschichtung gewährleistet, und der Elastizität der Beschichtung, welche eine gute Stabilität der Beschichtung bei Temperaturschwankungen sicherstellt, angestrebt wird. Mit Vorteil werden hierbei wässrige Kompositpartikel-Dispersionen verwendet, deren Polymerisat eine Glasübergangstemperatur im Bereich von -40 bis +25 °C aufweist, wobei als feinteilige anorganische Feststoffe insbesondere Siliziumdioxidteilchen mit einer mittleren Teilchengröße von 10 bis 30 nm eingesetzt werden und wobei der Gehalt der Siliziumdioxidteilchen in den Kompositpartikeln zwischen 20 und 50 Gew.-% beträgt. Im Vergleich zu den bekannten Bindemitteln auf Acrylatbasis vermögen jedoch die bekannten Holzbeschichtungsformulierungen auf Basis von wässrigen Kompositpartikel-Dispersionen in bezug auf die Wasserpermeabilität nicht voll zu befriedigen.

Der vorliegenden Erfindung lag daher die Aufgabe zugrunde, wässrige Kompositpartikel-Dispersionen als Bindemittel in Holzbeschichtungsformulierungen bereitzustellen, welche eine geringere Wasserpermeabilität der Holzbeschichtungen gewährleisten.

Überraschender Weise wurde die Aufgabe durch die eingangs definierte Verwendung von speziellen wässrigen Kompositpartikel-Dispersionen gelöst.

Kompositpartikel, welche aus Polymerisat und feinteiligem anorganischem Feststoff aufgebaut sind, insbesondere in Form ihrer wässrigen Dispersionen (wässrige Kompositpartikel-Dispersionen) sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix und feinteiligem anorganischen Feststoff aufgebaute Partikel in disperser Verteilung befindlich enthalten. Der mittleren Durchmesser der Kompositpartikel liegt in der Regel im Bereich ≥ 10 nm und ≤ 1000 nm, oft im Bereich ≥ 50 nm und ≤ 400 nm und häufig im Bereich ≥ 100 nm und ≤ 300 nm.

Kompositpartikel und Verfahren zu ihrer Herstellung in Form von wässrigen Kompositpartikel-Dispersionen sowie deren Verwendung sind dem Fachmann bekannt und beispielsweise in den Schriften US-A 3,544,500, US-A 4,421,660, US-A 4,608,401, US-A 4,981,882, EP-A 104 498, EP-A 505 230, EP-A 572 128, GB-A 2 227 739, WO 0118081, WO 0129106, WO 03000760 sowie in Long et al., Tianjin Daxue Xuebao 1991, 4, Seiten 10 bis 15, Bourgeat-Lami et al., Die Angewandte Makromolekulare Chemie 1996, 242, Seiten 105 bis 122, Paulke et al., Synthesis Studies of Paramagnetic Polystyrene Latex Particles in Scientific and Clinical Applications of Magnetic Carriers, Seiten 69 bis 76, Plenum Press, New York, 1997, Armes et al., Advanced Materials 1999, 11, Nr. 5, Seiten 408 bis 410, offenbart.

Die Herstellung der wässrigen Kompositpartikel-Dispersionen erfolgt dabei vorteilhaft dergestalt, dass ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergiermittels nach der Methode der radikalisch wässrigen Emulsionspolymerisation polymerisiert werden.

Erfindungsgemäss können alle, beispielsweise auch die nach dem vorgenannten Stand der Technik zugänglichen wässrigen Kompositpartikel-Dispersionen eingesetzt werden, zu deren Herstellung eine Monomerenmischung verwendet wurde, welche zu > 0 und ≤ 10 Gew.-%, bevorzugt 0,1 bis 5 Gew.-% und insbesondere bevorzugt 0,5 bis 3 Gew.-% an Epoxidmonomere enthält. Solche wässrigen Kompositpartikel-Dispersionen und Verfahren zu ihrer Herstellung sind insbesondere in der nicht vorveröffentlichten deutschen Patentanmeldung mit dem Aktenzeichen DE 102 00 500 918.2 offenbart, auf welche im Rahmen dieser Patentanmeldung ausdrücklich Bezug genommen werden soll.

Erfindungsgemäss können vorteilhaft solche wässrigen Kompositpartikel-Dispersionen eingesetzt werden, die unter Einsatz der Epoxidmonomeren-enthaltenden Monomerenmischung nach der in der WO 03000760 offenbarten Verfahrensweise hergestellt wurden. Dieses in der WO 03000760 offenbarte Verfahren zeichnet sich dadurch aus, dass die Monomerenmischung in wässrigem Medium dispers verteilt und mittels wenigstens eines radikalischen Polymerisationsinitiators im Beisein wenigstens eines dispers verteilten, feinteiligen anorganischen Feststoffs und wenigstens

eines Dispergiermittels nach der Methode der radikalisch wässrigen Emulsionspolymerisation polymerisiert wird, wobei

a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen mittleren Durchmesser ≤ 100 nm aufweisen,

b) die dispergierten Feststoffteilchen des wenigstens einen anorganischen Feststoffs in einer wässrigen Standardkaliumchlorid-Lösung bei einem pH-Wert, der dem pH-Wert des wässrigen Dispergiermediums vor Beginn der Zugabe der Dispergiermittel entspricht, eine von Null verschiedene elektrophoretische Mobilität zeigen,

c) die wässrige Feststoffteilchendispersion vor Beginn der Zugabe der Monomerenmischung mit wenigstens einem anionischen, kationischen und nichtionischen Dispergiermittel versetzt wird,

d) danach von der Gesamtmenge der Monomerenmischung 0,01 bis 30 Gew.-% der wässrigen Feststoffteilchendispersion zugesetzt und bis zu einem Umsatz von wenigstens 90 % polymerisiert werden
und

e) daran anschließend die Restmenge der Monomerenmischung unter Polymerisationsbedingungen nach Maßgabe des Verbrauchs kontinuierlich zugegeben wird.

Für dieses Verfahren sind alle diejenigen feinteiligen anorganischen Feststoffe geeignet, welche stabile wässrige Dispersionen ausbilden, die bei einer Anfangsfeststoffkonzentration von ≥ 1 Gew.-%, bezogen auf die wässrige Dispersion des wenigstens einen anorganischen Feststoffs, noch eine Stunde nach ihrer Herstellung ohne Rühren oder Schütteln mehr als 90 Gew.-% des ursprünglich dispergierten Feststoffes in dispergierter Form enthalten und deren dispergierten Feststoffteilchen einen mittleren Durchmesser ≤ 100 nm aufweisen und darüber hinaus bei einem pH-Wert, der dem pH-Wert des wässrigen Reaktionsmediums vor Beginn der Zugabe der Dispergiermittel entspricht, eine von Null verschiedene elektrophoretische Mobilität zeigen.

Die quantitative Bestimmung der Anfangsfeststoffkonzentration und der Feststoffkonzentration nach einer Stunde sowie die Ermittlung der mittleren Teilchendurchmesser erfolgt über die Methode der Analytischen Ultrazentrifuge (vgl. hierzu S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Die bei den Teilchendurchmesser angegebenen Werte entsprechen den sogenannten $d_{50}$-Werten.

Die Methode zur Bestimmung der elektrophoretischen Mobilität ist dem Fachmann bekannt (vgl. z. B. R. J. Hunter, Introduction to modern Colloid Science, Kapitel 8.4, Seiten 241 bis 248, Oxford University Press, Oxford, 1993 sowie K. Oka und K. Furusawa, in Electrical Phenomena at Interfaces, Surfactant Science Series, Vol. 76, Kapitel 8, Seiten 151 bis 232, Marcel Dekker, New York, 1998). Die elektrophoretische Mobilität der im wässrigen Reaktionsmedium dispergierten Feststoffteilchen wird mittels eines handelsüblichen Elektrophoresegeräts, wie beispielsweise dem Zetasizer 3000 der Fa. Malvern Instruments Ltd., bei 20 °C und Atmosphärendruck (= 1 atm = 1,013 bar absolut) bestimmt. Hierzu wird die wässrige Feststoffteilchendispersion mit einer pHneutralen 10 millimolaren (mM) wässrigen Kaliumchlorid-Lösung (Standardkaliumchlorid-Lösung) soweit verdünnt, dass die Feststoffteilchen-Konzentration ca. 50 bis 100 mg/l beträgt. Die Einstellung der Meßprobe auf den pH-Wert, den das wässrige Reaktionsmedium vor Beginn der Zugabe der Dispergiermittel aufweist, erfolgt mittels der gängigen anorganischen Säuren, wie beispielsweise verdünnter Salzsäure oder Salpetersäure oder Basen, wie beispielsweise verdünnter Natronlauge oder Kalilauge. Die Wanderung der dispergierten Feststoffteilchen im elektrischen Feld wird mittels der sogenannten elektrophoretischen Lichtstreuung detektiert (vgl. z. B. B. R. Ware und W. H. Flygare, Chem. Phys. Lett. 1971, 12, Seiten 81 bis 85). Dabei wird das Vorzeichen der elektrophoretischen Mobilität durch die Wanderungsrichtung der dispergierten Feststoffteilchen definiert, d. h. wandern die dispergierten Feststoffteilchen zur Kathode, ist deren elektrophoretische Mobilität positiv, wandern sie dagegen zur Anode, ist sie negativ.

Ein geeigneter Parameter, um die elektrophoretische Mobilität von dispergierten Feststoffteilchen in einem gewissen Umfang zu beinflussen oder einzustellen, ist der pH-Wert des wässrigen Reaktionsmediums. Durch Protonierung bzw. Deprotonierung der dispergierten Feststoffteilchen wird die elektrophoretische Mobilität im sauren pH-Bereich (pH-Wert < 7) in positiver und im alkalischen Bereich (pH-Wert > 7) in negativer Richtung verändert. Ein für das in der WO 03000760 offenbarte Verfahren geeigneter pH-Bereich ist der, innerhalb dessen sich eine radikalisch initiierte wässrige Emulsionspolymerisation durchführen lässt. Dieser pH-Bereich liegt in der Regel bei pH 1 bis 12, häufig bei pH 1,5 bis 11 und oft bei pH 2 bis 10.

Der pH-Wert des wässrigen Reaktionsmediums kann mittels handelsüblicher Säuren, wie beispielsweise verdünnter Salz-, Salpeter- oder Schwefelsäure oder Basen, wie beispielsweise verdünnter Natron- oder Kalilauge, eingestellt werden. Häufig ist es günstig, wenn eine Teil- oder die Gesamtmenge der zur pH-Einstellung verwendeten Säure- oder Basenmenge dem wässrigen Reaktionsmedium vor dem wenigstens einen feinteiligen anorganischen Feststoff zugesetzt wird.

Vorteilhaft für das gemäß WO 03000760 offenbarte Verfahren ist, dass bezogen auf 100 Gew.-Teile Monomerenmischung vorteilhaft 1 bis 1000 Gew.-Teile des feinteiligen anorganischen Feststoffs eigesetzt werden und, dass dann, wenn die dispergierten Feststoffteilchen unter den vorgenannten pH-Bedingungen

- eine elektrophoretische Mobilität mit negativem Vorzeichen aufweisen, 0,01 bis 10 Gew.-Teile, bevorzugt 0,05 bis 5 Gew.-Teile und insbesondere bevorzugt 0,1 bis 3 Gew.-Teile wenigstens eines kationischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein anionisches Dispergiermittel eingesetzt werden, wobei dessen Menge so bemessen wird, dass das äquivalente Verhältnis von anionischem zu kationischem Dispergiermittel größer 1 ist, oder

- eine elektrophoretische Mobilität mit positivem Vorzeichen aufweisen, 0,01 bis 10 Gew.-Teile, bevorzugt 0,05 bis 5 Gew.-Teile und insbesondere bevorzugt 0,1 bis 3 Gew.-Teile wenigstens eines anionischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein kationisches Dispergiermittel eingesetzt werden, wobei dessen Menge so bemessen wird, dass das äquivalente Verhältnis von kationischem zu anionischem Dispergiermittel größer 1 ist.

Unter äquivalentem Verhältnis von anionischem zu kationischem Dispergiermittel wird das Verhältnis der eingesetzten Molzahl des anionischen Dispergiermittels multipliziert mit der Anzahl der pro Mol des anionischen Dispergiermittels enthaltenen anionischen Gruppen dividiert durch die eingesetzte Molzahl des kationischen Dispergiermittels multipliziert mit der Anzahl der pro Mol des kationischen Dispergiermittels enthaltenen kationischen Gruppen verstanden. Entsprechendes gilt für das äquvalente Verhältnis von kationischem zu anionischem Dispergiermittel.

Die Gesamtmenge des gemäß der WO 03000760 verwendeten wenigstens einen anionischen, kationischen und nichtionischen Dispergiermittels kann in der wässrigen Feststoffdispersion vorgelegt werden. Es ist jedoch auch möglich, lediglich eine Teilmenge der genannten Dispergiermittel, in der wässrigen Feststoffdispersion vorzulegen und die verbliebenen Restmengen während der radikalischen Emulsionspolymerisation kontinuierlich oder diskontinuierlich zuzugeben. Verfahrenswesentlich ist jedoch, dass vor und während der radikalisch initiierten Emulsionspolymerisation das vorgenannte äquivalente Verhältnis von anionischem und kationischem Dispergiermittel in Abhängigkeit vom elektrophoretischen Vorzeichen des feinteiligen Feststoffs aufrechterhalten wird. Werden daher anorganische Feststoffteilchen eingesetzt, welche unter den vorgenannten pH-Bedingungen eine elektrophoretische Mobilität mit negativem Vorzeichen aufweisen, so muss das äquivalente Verhältnis von anionischem zu kationischem Dispergiermittel während der gesamten Emulsionspolymerisation größer 1 sein. In entsprechender Weise muss bei anorganischen Feststoffteilchen mit einer elektrophoretischen Mobilität mit positivem Vorzeichen das äquivalente Verhältnis von kationischem zu anionischem Dispergiermittel während der gesamten Emulsionspolymerisation größer 1 sein. Günstig ist es, wenn die äquivalenten Verhältnisse $\geq 2$, $\geq 3$, $\geq 4$, $\geq 5$, $\geq 6$, $\geq 7$, oder $\geq 10$ sind, wobei die äquivalenten Verhältnisse im Bereich zwischen 2 und 5 besonders günstig sind.

Für das in der WO 03000760 offenbarte Verfahren sowie allgemein zur Herstellung von wässrigen Kompositpartikel-Disperisonen einsetzbare feinteilige anorganische Feststoffe sind Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtleben Chemie GmbH), Zirkonium-(IV)-oxid, Zinn-(II)-oxid, Zinn-(IV)-oxid (beispielsweise kommerziell verfügbar als Nyacol® SN-Marken der Fa. Akzo-Nobel), Aluminiumoxid (beispielsweise kommerziell verfügbar als Nyacol® AL-Marken der Fa. Akzo-Nobel), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec®-Marken der Fa. Sachtleben Chemie GmbH), Nickel-(II)-oxid , Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Fa. Akzo-Nobel), Cer-(IV)-oxid (beispielsweise kommerziell verfügbar als Nyacol® CEO2-Marken der Fa. Akzo-Nobel) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal®-Marken der Fa. Condea-Chemie GmbH) und Hydroxyeisen-(III)-oxid amorph und/oder in ihren unterschiedlichen

Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [$Ca_5\{(PO_4)_3OH\}$], Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH (Marke der Südchemie AG), Saponit® SKS-20 und Hektorit® SKS 21 (Marken der Hoechst AG) sowie Laponite® RD und Laponite® GS (Marken der Laporte Industries Ltd.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche erfindungsgemäss einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil® (Marke der Fa. Degussa AG), Levasil® (Marke der Fa. Bayer AG), Ludox® (Marke der Fa. DuPont), Nyacol® und Bindzil® (Marken der Fa. Akzo-Nobel) und Snowtex® (Marke der Fa. Nissan Chemical Industries, Ltd.) bezogen werden. Erfindungsgemäss geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20 °C und Atmosphärendruck ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH, Saponit® SKS-20 und Hektorit® SKS 21 sowie Laponite® RD und Laponite® GS, Eisen-(II)-oxid, Eisen-(III)-oxid, Eisen-(II/III)-oxid, Titandioxid, Hydroxylapatit, Zinkoxid und Zinksulfid.

Bevorzugt ist der wenigstens eine feinteilige anorganische Feststoff ausgewählt aus der Gruppe umfassend Siliziumdioxid, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinn-(IV)-oxid, Cer-(IV)-oxid, Yttrium-(III)-oxid, Titandioxid, Hydroxylapatit, Zinkoxid und Zinksulfid.

Insbesondere bevorzugt sind siliziumhaltige Verbindungen, wie pyrogene und/oder kolloidale Kieselsäure, Siliziumdioxid-Sole und/oder Schichtsilikate. Bevorzugt weisen diese siliziumhaltigen Verbindungen eine elektrophoretische Mobilität mit negativem Vorzeichen auf.

Vorteilhaft können auch die kommerziell verfügbaren Verbindungen der Aerosil®-, Levasil®-, Ludox®-, Nyacol®- und Bindzil®-Marken (Siliziumdioxid), Disperal®-Marken (Hydroxyaluminiumoxid), Nyacol® AL-Marken (Aluminiumoxid), Hombitec®-Marken (Titandioxid), Nyacol® SN-Marken (Zinn-(IV)-oxid), Nyacol® YTTRIA-Marken (Yttrium-(III)-oxid), Nyacol® CEO2-Marken (Cer-(IV)-oxid) und Sachtotec®-Marken (Zinkoxid) in den erfindungsgemässen Verfahren eingesetzt werden.

Die zur Herstellung der Kompositpartikel einsetzbaren feinteiligen anorganischen Feststoffe sind so beschaffen, dass die im wässrigen Reaktionsmedium dispergierten Feststoffteilchen einen mittleren Teilchendurchmesser von ≤ 100 nm aufweisen. Erfolgreich werden solche feinteiligen anorganischen Feststoffe eingesetzt, deren dispergierte Teilchen einen mittleren Teilchendurchmesser > 0 nm aber ≤ 90 nm, ≤ 80 nm, ≤ 70 nm, ≤ 60 nm, ≤ 50 nm, ≤ 40 nm, ≤ 30

nm, ≤ 20 nm oder ≤ 10 nm und alle Werte dazwischen aufweisen. Von Vorteil werden feinteilige anorganische Feststoffe eingesetzt, welche einen Teilchendurchmesser ≤ 50 nm aufweisen. Die Ermittlung der Teilchendurchmesser erfolgt über die Methode der Analytischen Ultrazentrifuge.

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D. F. Evans, H. Wennerström in The Colloidal Domain, Seiten 363 bis 405, Verlag Chemie, Weinheim, 1994 und R. J. Hunter in Foundations of Colloid Science, Vol. I, Seiten 10 bis 17, Clarendon Press, Oxford, 1991).

Die Herstellung der stabilen Feststoffdispersion erfolgt häufig direkt bei der Synthese der feinteiligen anorganischen Feststoffe in wässrigem Medium oder alternativ durch Eindispergieren des feinteiligen anorganischen Feststoffs in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden.

Vorteilhaft für die Herstellung der wässrigen Kompositpartikel-Dispersionen sind solche feinteiligen anorganischen Feststoffe geeignet, deren wässrige Feststoffdispersion bei einer Anfangsfeststoffkonzentration von ≥ 1 Gew.-%, bezogen auf die wässrige Dispersion des feinteiligen anorganischen Feststoffs, noch eine Stunde nach ihrer Herstellung bzw. durch Aufrühren oder Aufschütteln der sedimentierten Feststoffe, ohne weiteres Rühren oder Schütteln mehr als 90 Gew.-% des ursprünglich dispergierten Feststoffes in dispergierter Form enthält und deren dispergierten Feststoffteilchen einen Durchmesser ≤ 100 nm aufweisen. Üblich sind Anfangsfeststoffkonzentrationen ≤ 60 Gew.-%. Vorteilhaft können jedoch auch Anfangsfeststoffkonzentrationen ≤ 55 Gew.-%, ≤ 50 Gew.-%, ≤ 45 Gew.-%, ≤ 40 Gew.-%, ≤ 35 Gew.-%, ≤ 30 Gew.-%, ≤ 25 Gew.-%, ≤ 20 Gew.-%, ≤ 15 Gew.-%, ≤ 10 Gew.-% sowie ≥ 2 Gew.-%, ≥ 3 Gew.-%, ≥ 4 Gew.-% oder ≥ 5 Gew.-% und alle Werte dazwischen, jeweils bezogen auf die wässrige Dispersion des feinteiligen anorganischen Feststoffes, eingesetzt werden. Bezogen auf 100 Gew.-Teile an Monomerenmischung werden bei der Herstellung wässriger Kompositpartikel-Dispersionen häufig 1 bis 1000 Gew.-Teile, in der Regel 5 bis 300 Gew.-Teile und oft 10 bis 200 Gew.-Teile des wenigstens einen feinteiligen anorganischen Feststoffes verwendet. Vorteilhaft werden 10 bis 50 Gew.-Teile und insbesondere vorteilhaft 25 bis 40 Gew.-Teile des wenigstens einen feinteiligen anorganischen Feststoffes, bezogen auf 100 Gew.-Teile Monomerenmischung, eingesetzt.

Bei der Herstellung der wässrigen Kompositpartikel-Dispersionen werden allgemein Dispergiermittel mitverwendet, die sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikel-Dispersionen gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Geeignete neutrale Schutzkolloide sind beispielsweise Polyvinylalkohole, Polyalkylenglykole, Cellulose-, Stärke- und Gelatinederivate.

Als anionische Schutzkolloide, d. h. Schutzkolloide, deren dispergierend wirkende Komponente wenigstens eine negative elektrische Ladung aufweist, kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht.

Geeignete kationische Schutzkolloide, d. h. Schutzkolloide, deren dispergierend wirkende Komponente wenigstens eine positive elektrische Ladung aufweist, sind beispielsweise die am Stickstoff protonierten und/oder alkylierten Derivate von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1500 liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z. B. ethoxilierte Mono-, Di- und Tri-Alkylphenole (EO-Grad: 3 bis 50, Alkylrest: $C_4$ bis $C_{12}$) sowie ethoxilierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxilate, EO-Grad: 3 bis 8), Lutensol® AO-Marken ($C_{13}C_{15}$-Oxoalkoholethoxilate, EO-Grad: 3 bis 30), Lutensol® AT-Marken ($C_{16}C_{18}$-Fettalkoholethoxilate, EO-Grad: 11 bis 80), Lutensol® ON-Marken ($C_{10}$-Oxoalkoholethoxilate, EO-Grad: 3 bis 11) und die Lutensol® TO-Marken ($C_{13}$-Oxoalkoholethoxilate,

EO-Grad: 3 bis 20) der BASF AG.

Übliche anionische Emulgatoren sind z. B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel I

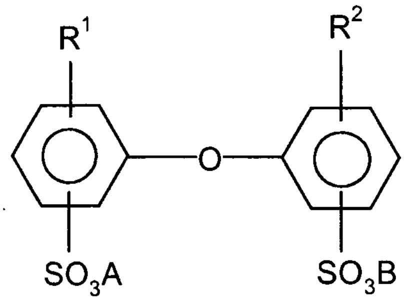

(I)

worin $R^1$ und $R^2$ H-Atome oder $C_4$- bis $C_{24}$-Alkyl bedeuten und nicht gleichzeitig H-Atome sind, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder -H, wobei $R^1$ und $R^2$ nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, z. B. aus US-A 4 269 749, und im Handel erhältlich.

Geeignete kationenaktive Emulgatoren sind in der Regel einen $C_6$- bis $C_{18}$-Alkyl-, - Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Häufig werden zur Herstellung der wässrigen Kompositpartikel-Dispersionen zwischen 0,1 bis 10 Gew.-%, oft 0,5 bis 7,0 Gew.-% und häufig 1,0 bis 5,0 Gew.-% an Dispergiermittel, jeweils bezogen auf die Gesamtmenge an wässriger Kompositpartikel-Dispersion, eingesetzt. Bevorzugt werden Emulgatoren, insbesondere nichtionische und/ oder anionische Emulgatoren verwendet. In dem gemäß WO 03000760 offenbarten Verfahren werden anionische, kationische und nichtionische Emulgatoren als Dispergiermittel eingesetzt.

Erfindungswesentlich ist, dass zur Herstellung der erfindungsgemäss einsetzbaren wässrigen Kompositpartikel-Dispersion eine Monomerenmischung eingesetzt wird, welche aus ethylenisch ungesättigten Monomeren A und zu > 0 und ≤ 10 Gew.-% wenigstens eines, eine Epoxidgruppe aufweisenden ethylenisch ungesättigten Monomeren B (Epoxidmonomer) besteht.

Als Monomere A kommen u. a. insbesondere in einfacher Weise radikalisch polymerisierbare ethylenisch ungesättigte Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, Nitrile α,β-monoethylenisch ungesättigter Carbonsäuren, wie Acrylnitril sowie $C_{4-8}$-konjugierte Diene, wie 1,3-Butadien und Isopren. Die genannten Monomere bilden in der Regel die Hauptmonomeren, die, bezogen auf die Gesamtmenge der nach dem erfindungsgemäßen Verfahren zu polymerisierenden Monomeren A normalerweise einen Anteil von ≥ 50 Gew.-%, ≥ 80 Gew.-% oder ≥ 90 Gew.-% auf sich vereinen. In aller Regel weisen diese Monomeren in Wasser bei Normalbedingungen (20 °C,

Atmosphärendruck) lediglich eine mäßige bis geringe Löslichkeit auf.

Weitere Monomere A, die üblicherweise die innere Festigkeit der Verfilmungen der Polymermatrix erhöhen, weisen normalerweise wenigstens eine Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren, bezogen auf die Gesamtmenge der zu polymerisierenden Monomeren A, in Mengen von bis zu 5 Gew.-%, insbesondere 0,1 bis 3 Gew.-% und bevorzugt 0,5 bis 2 Gew.-% zur Polymerisation eingesetzt.

Als Monomere A sind auch Siloxangruppen enthaltende ethylenisch ungesättigte Monomere, wie die Vinyltrialkoxysilane, beispielsweise Vinyltrimethoxysilan, Alkylvinyldialkoxysilane, Acryloxyalkyltrialkoxysilane, oder Methacryloxyalkyltrialkoxysilane, wie beispielsweise Acryloxyethyltrimethoxysilan, Methacryloxyethyltrimethoxysilan, Acryloxypropyltrimethoxysilan oder Methacryloxypropyltrimethoxysilan einsetzbar. Diese Monomere werden in Gesamtmengen von bis zu 5 Gew.-%, häufig von 0,01 bis 3 Gew.-% und oft von 0,05 bis 1 Gew.-%, jeweils bezogen auf die Gesamtmenge der Monomeren A, verwendet. Erfindungsgemäß vorteilhaft werden vorgenannte Siloxangruppen enthaltende Monomere A in Gesamtmengen von 0,01 bis 5 Gew.-%, insbesondere von 0,01 bis 3 Gew.-% und bevorzugt von 0,05 bis 1 Gew.-%, jeweils bezogen auf die Gesamtmenge der zu polymerisierenden Monomeren A, verwendet. Von Bedeutung ist, dass die vorgenannten Siloxangruppen enthaltende ethylenisch ungesättigte Monomere vor, parallel zu oder nach den anderen Monomeren A dosiert werden können.

Daneben können als Monomere A zusätzlich solche ethylenisch ungesättigten Monomere AS, die entweder wenigstens eine Säuregruppe und/oder deren entsprechendes Anion oder solche ethylenisch ungesättigten Monomere AN, die wenigstens eine Amino-, Amido-, Ureido- oder N-heterocyclische Gruppe und/oder deren am Stickstoff protonierten oder alkylierten Ammoniumderivate enthalten, eingesetzt werden. Bezogen auf die Gesamtmenge der zu polymerisierenden Monomeren A, beträgt die Menge an Monomeren AS bzw. Monomeren AN bis zu 10 Gew.-%, oft 0,1 bis 7 Gew.-% und häufig 0,2 bis 5 Gew.-%.

Als Monomere AS werden ethylenisch ungesättigte Monomere mit wenigstens einer Säuregruppe eingesetzt. Dabei kann die Säuregruppe beispielsweise eine Carbonsäure-, Sulfonsäure-, Schwefelsäure-, Phosphorsäure- und/ oder Phosphonsäuregruppe sein. Beispiele für solche Monomere AS sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Erfindungsgemäss lassen sich aber auch die Ammonium- und Alkalimetallsalze der vorgenannten wengistens eine Säuregruppe aufweisenden ethylenisch ungesättigten Monomeren einsetzen. Als Alkalimetall insbesondere bevorzugt ist Natrium und Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure als Monomere AS eingesetzt.

Als Monomere AN werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere AN, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino)ethylacrylat, 2-(N-Ethylamino) ethylmethacrylat, 2-(N-n-Propylamino)ethylacrylat, 2-(N-n-Propylamino)ethylmethacrylat, 2-(N-iso-Propylamino) ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl® TBAEMA der Fa. Elf Atochem), 2-(N,N-Dimethylamino) ethylacrylat (beispielsweise kommerziell verfügbar als Norsocryl® ADAME der Fa. Elf Atochem), 2-(N,N-Dimethylamino) ethylmethacrylat (beispielsweise kommerziell verfügbar als Norsocryl® MADAME der Fa. Elf Atochem), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-iso-propylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino) propylmethacrylat, 3-(N,N-Di-iso-propylamino)propylacrylat und 3-(N,N-Di-iso-propylamino)propylmethacrylat.

Beispiele für Monomere AN, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N, N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere AN, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl® 100 der Fa. Elf Atochem).

Beispiele für Monomere AN, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden als Monomere AN folgende Verbindungen eingesetzt: 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl) methacrylamid und 2-(1-Imidazolin-2-onyl)ethylmethacrylat.

Abhängig vom pH-Wert des wässrigen Reaktionsmediums kann ein Teil oder die Gesamtmenge der vorgenannten stickstoffhaltigen Monomere AN in der am Stickstoff protonierten quartären Ammoniumform vorliegen. ,

Als Monomere AN, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl® ADAMQUAT MC 80 der Fa. Elf Atochem), 2-(N,N,N-Trimethylammonium)ethylmethacrylatchlorid (beispielsweise kommerziell verfügbar als Norsocryl® MADQUAT MC 75 der Fa. Elf Atochem), 2-(N-Methyl-N,N-diethylammonium)ethylacrylatchlorid, 2-(N-Methyl-N,N-diethylammonium)ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)ethylacrylatchlorid (beispielsweise kommerziell verfügbar als Norsocryl® ADAMQUAT BZ 80 der Fa. Elf Atochem), 2-(N-Benzyl-N,N-dimethylammonium)ethylmethacrylatchlorid (beispielsweise kommerziell verfügbar als Norsocryl® MADQUAT BZ 75 der Fa. Elf Atochem), 2-(N-Benzyl-N,N-diethylammonium)ethylacrylatchlorid, 2-(N-Benzyl-N,N-diethylammonium)ethylmethacrylatchlorid, 2-( N-Benzyl-N,N-dipropylammonium)ethylacrylatchlorid, 2-( N-Benzyl-N,N-dipropylammonium)ethylmethacrylatchlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropylammonium)propylacrylatchlorid, 3-(N-Methyl-N,N-dipropylammonium) propylmethacrylatchlorid, 3-(N-Benzyl-N,N-dimethylammonium)propylacrylatchlorid, 3-(N-Benzyl-N,N-dimethylammonium)propylmethacrylatchlorid, 3-(N-Benzyl-N,N-diethylammonium)propylacrylatchlorid, 3-(N-Benzyl-N,N-diethylammonium)propylmethacrylatchlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)ethylacrylatchlorid und 2-(N-Benzyl-N,N-dimethylammonium) ethylmethacrylatchlorid verwendet.

Selbstverständlich können auch Gemische der vorgenannten ethylenisch ungesättigten Monomere AS bzw. AN eingesetzt werden.

Von Bedeutung ist, dass im Falle der WO 03000760 beim Vorliegen von dispergierten Feststoffteilchen mit einer elektrophoretischen Mobilität mit negativem Vorzeichen, eine Teil- oder die Gesamtmenge des wenigstens einen anionischen Dispergiermittels durch die äquivalente Menge wenigstens eines Monomeren AS und im Falle des Vorliegens von dispergierten Feststoffteilchen mit einer elektrophoretischen Mobilität mit positivem Vorzeichen, eine Teil- oder die Gesamtmenge des wenigstens einen kationischen Dispergiermittels durch die äquivalente Menge wenigstens eines

Monomeren AN ersetzt werden kann.

Mit besonderem Vorteil wird die Zusammensetzung der Monomeren A so gewählt, dass nach deren alleiniger Polymerisation ein Polymerisat resultieren würde, dessen Glasübergangstemperatur ≤ 100 °C, bevorzugt ≤ 60 °C, insbesondere ≤ 40 °C und häufig ≥ -30 °C und oft ≥ -20 °C oder ≥ -10 °C beträgt.

Üblicherweise erfolgt die Bestimmung der Glasübergangstemperatur nach DIN 53 765 (Differential Scanning Calorimetry, 20 K/min, midpoint-Messung).

Nach Fox (T. G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur $T_g$ von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z. B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z. B. J. Brandrup, E. H. Immergut, Polymer Handbook, 1st Ed., J. Wiley, New York, 1966; 2nd Ed. J. Wiley, New York, 1975 und 3rd Ed. J. Wiley, New York, 1989.

Als Monomer B (Epoxidmonomer) können alle ethylenisch ungesättigten Verbindungen eingesetzt werden, welche wenigstens eine Epoxidgruppe aufweisen. Insbesondere ist das wenigstens eine Epoxidmonomer jedoch ausgewählt aus der Gruppe umfassend 1,2-Epoxybuten-3, 1,2-Epoxy-3-methylbuten-3, Glycidylacrylat (2,3-Epoxypropylacrylat), Glycidylmethacrylat (2,3-Epoxypropylmethacrylat), 2,3-Epoxybutylacrylat, 2,3-Epoxybutylmethacrylat, 3,4-Epoxybutylacrylat und 3,4-Epoxybutylmethacrylat sowie die entsprechenden alkoxylierten, insbesondere ethoxylierten und/oder propoxylierten Glycidylacrylate und Glycidylmethacrylate, wie sie beispielsweise in der US-A 5,763,629 offenbart sind. Selbstverständlich können erfindungsgemäss auch Gemische von Epoxidmonomeren herangezogen werden. Bevorzugt werden Glycidylacrylat und/oder Glycidylmethacrylat als Epoxidmonomere eingesetzt.

Bezogen auf die Gesamtmonomerenmenge, beträgt die Menge an Epoxidmonomer > 0 und ≤ 10 Gew.-%. Häufig beträgt die Gesamtmenge an Epoxidmonomer ≥ 0,01 Gew.-%, ≥ 0,1 Gew.-% oder ≥ 0,5 Gew.-%, oft ≥ 0,8 Gew.-%, ≥ 1 Gew.-% oder ≥ 1,5 Gew.-%, bzw. ≤ 8 Gew.-%, ≤ 7 Gew.-% oder ≤ 6 Gew.-% und oft ≤ 5 Gew.-%, ≤ 4 Gew.-% oder ≤ 3 Gew.-%, jeweils bezogen auf die Gesamtmonomerenmenge. Bevorzugt beträgt die Menge an Epoxidmonomeren ≥ 0,1 und ≤ 5 Gew.-% und insbesondere bevorzugt ≥ 0,5 und ≤ 3 Gew.-%, jeweils bezogen auf die Gesamtmonomerenmenge.

Demnach besteht die zu polymerisierende Monomerenmischung bevorzugt aus ≥ 95 und ≤ 99,9 Gew.-% und insbesondere bevorzugt ≥ 97 und ≤ 99,5 Gew.-% an Monomeren A und ≥ 0,1 und ≤ 5 Gew.-% und insbesondere bevorzugt ≥ 0,5 und ≤ 3 Gew.-% an Epoxidmonomeren.

Von Bedeutung ist, dass die Epoxidmonomeren erfindungsgemäss im Monomerengemisch mit den Monomeren A eingesetzt werden. Es ist jedoch auch möglich, die Epoxidmonomeren dem wässrigen Polymerisationsmedium separat parallel zu den Monomeren A zuzudosieren. Dabei können die Epoxidmonomeren dem Polymerisationsmedium diskontinuierlich in einer oder mehreren Portionen oder kontinuierlich mit gleichbleibenden oder sich verändernden Mengenströmen zudosiert werden. In der Regel werden die Epoxidmonomeren dem Polymerisationsmedium jedoch gemeinsam mit den Monomeren A im Monomerengemisch zugeführt.

Mit Vorteil wird die zu polymerisierende Monomerenmischung so gewählt, dass das daraus erhaltene Polymerisat eine Glasübergangstemperatur ≤ 100 °C, bevorzugt < 60 °C oder ≤ 40 °C, insbesondere ≤ 30 °C oder ≤ 20 °C und häufig ≥ -30 °C oder ≥ -15 °C und oft ≥ -10 °C oder ≥ -5 °C aufweist und somit die wässrigen Kompositpartikel-Dispersionen - gegebenenfalls in Anwesenheit üblicher Filmbildehilfsmittel - in einfacher Weise in die die feinteiligen anorganischen Feststoffe enthaltenden Polymerisatfilme (Kompositfilme) überführbar sind.

Zur Herstellung der erfindungsgemäss einsetzbaren wässrigen Kompositpartikel-Dispersion durch radikalische Polymerisation kommen alle diejenigen radikalischen Polymerisationsinitiatoren in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und DiNatrium-,- Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten radikalischen Polymerisationsinitiators, bezogen auf die Gesamtmenge des Monomerengemisches, 0,1 bis 5 Gew.-%.

Als Reaktionstemperatur für die radikalische wässrige Polymerisationsreaktion in Anwesenheit des feinteiligen anorganischen Feststoffes kommt der gesamte Bereich von 0 bis 170 °C in Betracht. Dabei werden in der Regel Temperaturen von 50 bis 120 °C, häufig 60 bis 110 °C und oft ≥ 70 bis 100 °C angewendet. Die radikalische wässrige Emulsionspolymerisation kann bei einem Druck kleiner, gleich oder größer 1 bar (absolut) durchgeführt werden, wobei die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Polymerisation bei 1 atm (absolut) unter Inertgasatmosphäre, wie beispielsweise unter Stickstoff oder Argon durchgeführt.

Das wässrige Reaktionsmedium kann prinzipiell in untergeordnetem Maße auch wasserlösliche organische Lösungsmittel, wie beispielsweise Methanol, Ethanol, Isopropanol, Butanole, Pentanole, aber auch Aceton etc. umfassen. Bevorzugt erfolgt die Polymerisationsreaktion jedoch in Abwesenheit solcher Lösungsmittel.

Neben den vorgenannten Komponenten können in den Verfahren zur Herstellung der wässrigen Kompositpartikel-Dispersion optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise E-thanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen. Die optional eingesetzte Gesamtmenge der radikalkettenübertragenden Verbindungen, bezogen auf die Gesamtmenge der zu polymerisierenden Monomeren, ist in der Regel ≤ 5 Gew.-%, oft ≤ 3 Gew.-% und häufig ≤ 1 Gew.-%.

Die nach dem erfindungsgemäßen Verfahren zugänglichen wässrigen Kompositpartikel-Dispersionen weisen üblicherweise einen Gesamtfeststoffgehalt von 1 bis 70 Gew.-%, häufig von 5 bis 65 Gew.-% und oft von 10 bis 60 Gew.-% auf.

Die nach den verschiedenen Verfahren, insbesondere gemäß dem in der WO 03000760 offenbarten Verfahren erhältlichen Kompositpartikel weisen in der Regel mittlere Teilchendurchmesser im Bereich ≥ 10 nm und ≤ 1000 nm, häufig im Bereich ≥ 50 nm und ≤ 400 nm und oft im Bereich ≥ 100 nm und ≤ 300 nm auf. Auch die Bestimmung der mittleren Kompositpartikel-Teilchendurchmesser erfolgt durch die Methode der Analytischen Ultrazentrifuge (vgl. hierzu S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Die angegebenen Werte entsprechen den sogenannten $d_{50}$-Werten. Zur Verwendung in Holzbeschichtungsformulierungen eignen sich vorteilhaft solche Kompositpartikel-Dispersionen, deren Kompositpartikel einen mittleren Teilchendurchmesser ≥ 50 nm und ≤ 300 nm, bevorzugt ≤ 200 nm und insbesondere < 150 nm aufweisen.

Die nach den verschiedenen Verfahren zugänglichen Kompositpartikel können unterschiedliche Strukturen aufweisen. Dabei können die Kompositpartikel ein oder mehrere der feinteiligen Feststoffteilchen enthalten. Die feinteiligen Feststoffteilchen können vollständig von der Polymermatrix umhüllt sein. Es ist aber auch möglich, dass ein Teil der feinteiligen Feststoffteilchen von der Polymermatrix umhüllt ist, während eines anderer Teil auf der Oberfläche der Polymermatrix angeordnet ist. Selbstverständlich ist es auch möglich, dass ein Großteil der feinteiligen Feststoffpartikel auf der Oberfläche der Polymermatrix gebunden ist.

Üblicherweise weisen die nach den verschiedenen Verfahren zugänglichen Kompositpartikel einen Gehalt an feinteiligem anorganischem Feststoff von ≥ 10 Gew.-%, bevorzugt ≥ 15 Gew.-% und insbesondere bevorzugt ≥ 20 Gew.-%, ≥ 25 Gew.-% oder ≥ 30 Gew.-%, jeweils bezogen auf die Kompositpartikel (entsprechend der Summe aus Polymerisatmenge und Feststoffteilchenmenge) auf. Erfindungsgemäß vorteilhaft werden solche wässrigen Kompositpartikel-Dispersionen eingesetzt, deren Kompositpartikel einen Gehalt an feinteiligem anorganischem Feststoff im Bereich ≥ 10 und ≤ 50 Gew.-% und insbesondere vorteilhaft ≥ 20 und ≤ 40 Gew.-% aufweisen.

Die vorgenannten wässrigen Kompositpartikel-Dispersionen eignen sich vorteilhaft als Bindemittel in Holzbeschichtungsformulierungen.

Erfindungsgemässe Holzbeschichtungsformulierungen enthalten demgemäss eine wässrige Kompositpartikel-Dispersion, wobei bei der Herstellung der wässrigen Kompositpartikel-Dispersion ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes mit einem mittleren Teilchendurchmesser ≤ 100 nm und wenigstens eines Dispergiermittels nach der Methode der radikalisch wässrigen Emulsionspolymerisation polymerisiert werden, und wobei als ethylenisch ungesättigte Monomere eine Monomerenmischung eingesetzt wird, welche aus ethylenisch ungesättigten Monomeren A und zu > 0 und ≤ 10 Gew.-% wenigstens eines, eine Epoxidgruppe aufweisenden ethylenisch ungesättigten Monomeren B (Epoxidmonomer) besteht.

Im Rahmen dieser Schrift werden unter Holzbeschichtungsformulierungen alle Formulierungen auf Wasserbasis verstanden, welche zur Beschichtung von Holz bzw. Holzoberflächen eingesetzt werden, insbesondere jedoch Klarlacke, Holzlasuren, Holzfarben oder Glanzlacke.

Dabei versteht man unter Klarlacken pigmentfreie, transparent trocknende Holzbeschichtungsformulierungen, unter Holzlasuren niedrig pigmentierte, transparent trocknende Beschichtungsformulierungen, welche die Holzstruktur sichtbar lassen, unter Holzfarben pigmentierte Beschichtungsformulierungen, die deckend auftrocknen und keine Holzstruktur sichtbar lassen und unter Glanzlacken pigmentierte Beschichtungsformulierungen, die deckend auftrocknen und einen hohen Glanz aufweisen.

Abhängig vom geplanten Einsatzzweck der Holzbeschichtungsformulierungen, können diese, neben den vorgenannten wässrigen Kompositpartikel-Dispersionen, weitere, dem Fachmann in Art und Menge geläufige, übliche Formulierungsbestandteile, wie beispielsweise Pigmente und Füllstoffe, sogenannte Filmbildehilfsmittel, Verdicker, Entschäumer, Netz- und Dispergierhilfsmittel, Neutralisationsmittel, Bläueschutzmittel und/oder Konservierungsmittel enthalten.

Als Pigmente können prinzipiell alle dem Fachmann geläufigen Weiß- bzw. Buntpigmente eingesetzt werden.

Als wichtigstes Weißpigment ist aufgrund seines hohen Brechungsindex und seines guten Deckvermögens Titandioxid in seinen verschiedenen Modifikationen zu nennen. Aber auch Zinkoxid und Zinksulfid werden als Weißpigmente eingesetzt. Dabei können diese Weißpigmente in oberflächenbeschichteter (d. h. gecoateter) bzw. unbeschichteter (d. h. nicht gecoateter) Form eingesetzt werden. Daneben werden aber auch organische Weißpigmente, wie beispielsweise nichtverfilmende styrol- und carboxylgruppenreiche hohle Polymerisatteilchen mit einer Teilchengröße von ca. 300 bis 400 nm (sogenannte Opakteilchen) verwendet.

Neben Weißpigmenten können zur Farbgestaltung - beispielsweise einer die erfindungsgemäss zugängliche wässrige Kompositpartikel-Dispersion enthaltende Beschichtungsmasse - dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbozole eingesetzt werden.

Als Füllstoffe werden im wesentlichen anorganische Materialien mit im Vergleich zu den Pigmenten geringerem Brechungsindex verwendet. Die pulverförmigen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Calciumcarbonat, kalziniertes Kaolin oder Bariumsulfat sowie pyrogene Kieselsäure. Bevorzugt wird als Füllstoff Calciumcarbonat in Form des kristallinen Calcits oder der amorphen Kreide eingesetzt.

Filmbildehilfsmittel, auch Koaleszenzhilfsmittel genannt, werden eingesetzt, um auch die in den Kompositpartikeln enthaltenen Polymerisate mit einer Glasübergangstemperatur von über 20 °C sicher bei Raumtemperatur verfilmen zu können. Diese Filmbildehilfsmittel verbessern die Filmbildung der polymeren Bindemittel bei der Ausbildung der Beschichtung und werden dann anschließend in Abhängigkeit von der Umgebungstemperatur, der Luftfeuchtigkeit und des Siedepunkts, sowie dem daraus resultierenden Dampfdruck aus der Beschichtung an die Umgebung abgegeben.

Bei den Filmbildehilfsmitteln, welche dem Fachmann bekannt sind, handelt es sich beispielsweise um Testbenzin, wassermischbare Glykolether, wie Butylglykol, Butyldiglykol, Dipropylenglykolmonomethyl- oder Dipropylenglykolbutylether sowie Glykolacetate, wie Butylglykolacetat, Butyldiglykolacetat, aber auch Ester von Carbonsäuren und Dicarbonsäuren, wie 2-Ethylhexylbenzoat, 2,2,4-Trimethylpentandiol-1,3-monoisobutyrat oder Tripropylenglykolmonoisobutyrat.

Um die Rheologie der Holzbeschichtungsformulierungen bei Herstellung, Handling, Lagerung und Applikation optimal einzustellen, werden häufig sogenannte Verdicker oder Rheologieadditive als Formulierungsbestandteil eingesetzt. Dem Fachmann sind eine Vielzahl unterschiedlicher Verdicker bekannt, beispielsweise organische Verdicker, wie Xanthanverdicker, Guarverdicker (Polysaccharide), Carboxymethylcellulose, Hydroxyethylcellulose, Methylcellulose, Hydroxypropylmethylcellulose, Ethylhydroxyethylcellulose (Cellulosederivate), alkaliquellbare Dispersionen (Acrylatverdicker) oder hydrophob modifizierte, polyetherbasierte Polyurethane (Polyurethanverdicker) oder anorganische Verdikker, wie Bentonit, Hectorit, Smectit, Attapulgit (Bentone) sowie Titanate oder Zirkonate (Metallorganyle).

Um die Schaumbildung bei Herstellung, Handling, Lagerung und Applikation der erfindungsgemäßen Holzbeschichtungsformulierungen zu vermeiden, finden sogenannte Entschäumer Verwendung. Die Entschäumer sind dem Fachmann geläufig. Es handelt sich hierbei im wesentlichen um Mineralöl- und die Silikonölentschäumer. Entschäumer, vor allem die hochaktiven silikonhaltigen, sind generell sehr sorgfältig auszuwählen und zu dosieren, da sie zu Oberflächendefekten (Krater, Dellen etc.) der Beschichtung führen können. Wesentlich ist, dass durch Zusatz von feinstteiligen, hydrophoben Partikeln, beispielsweise hydrophobe Kieselsäure oder Wachspartikel, in die Entschäumerflüssigkeit, die Entschäumerwirkung noch gesteigert werden kann.

Netz- und Dispergierhilfsmittel werden verwendet, um pulverförmige Pigmente und Füllstoffe in den erfindungsgemäß zu verwendeten Holzbeschichtungsformulierungen optimal zu verteilen. Dabei unterstützen die Netz- und Dispergierhilfsmittel den Dispergiervorgang durch Erleichterung der Benetzung der pulverförmigen Pigmente und Füllstoffe im wässrigen Dispersionsmedium (Netzmittelwirkung), durch Aufbrechen von Pulveragglomeraten (Spaltwirkung) und durch sterische bzw. elektrostatische Stabilisierung der beim Scherprozess entstehenden Pigment- und Füllstoffprimärpartikel (Dispergiermittelwirkung). Als Netz- und Dispergierhilfsmittel werden insbesondere die dem Fachmann geläufigen Polyphosphate und Salze von Polycarbonsäuren, insbesondere Natriumsalze von Polyacrylsäuren bzw. Acrylsäure-Copolymeren eingesetzt.

Falls erforderlich, können dem Fachmann als Neutralisationsmittel geläufige anorganische oder organische Säuren, wie beispielsweise Salz-, Schwefel-, Essig- oder Propionsäure oder Basen, wie Kali- oder Natronlauge, Ammoniak, Ethylendiamin zur pH-Werteinstellung der erfindungsgemäßen Holzbeschichtungsformulierungen verwendet werden.

Den erfindungsgemäßen Holzbeschichtungsformulierungen können zur Vermeidung des Befalls der Holzbeschichtung mit Bläuepilzen Fungizide als sogenannte Bläueschutzmittel beigemischt werden.

Um den Befall der erfindungsgemäßen Holzbeschichtungsformulierungen bei Herstellung, Handling, Lagerung und Applikation durch Mikroorganismen, wie beispielsweise Bakterien, (Schimmel)Pilzen oder Hefen zu vermeiden, werden häufig dem Fachmann geläufige Konservierungsmittel oder Biocide eingesetzt. Dabei finden insbesondere Wirkstoffkombinationen aus Methyl- und Chlorisothiazolinonen, Benzisothiazolinonen, Formaldehyd bzw. formaldehydabspaltende Agenzien Verwendung.

Neben vorgenannten Formulierungsbestandteilen können den erfindungsgemäßen Holzbeschichtungsformulierungen bei Herstellung, Handling, Lagerung und Applikation auch noch weitere, dem Fachmann geläufige Hilfsstoffe, wie beispielsweise Mattierungsmittel, Wachse oder Verlaufshilfsmittel etc. zugesetzt werden.

Die Beschichtung von Formkörpern mit wenigstens einer Holzoberfläche erfolgt in der Regel dergestalt, dass die Holzoberfläche mit 50 bis 500 g/m$^2$, häufig 100 bis 400 g/m$^2$ und oft 200 bis 350 g/m$^2$ der Holzbeschichtungsformulierung (als Feststoff gerechnet) beschichtet und anschließend getrocknet wird.

Dabei ist es prinzipiell unerheblich, ob die erfindungsgemäße Holzbeschichtungsformulierung auf die Holzoberfläche als Grundierung (Primer), also direkt auf die unbehandelte Holzoberfläche, als Deckschicht, also auf die mit einer Grundierung behandelte Holzoberfläche und/oder als sogenannter Topcoat, also auf die mit einer Deckschicht behandelte Holzoberfläche, aufgebracht wird. Um die Wasserpermeation und damit die Wasseraufnahme des Holzes möglichst gering zu halten, wird eine erfindungsgemäße Holzbeschichtungsformulierung vorteilhaft als Grundierung, Deckschicht und als Topcoat, insbesondere vorteilhaft als Deckschicht und als Topcoat und mit besonderem Vorteil ausschließlich als Topcoat auf die Holzoberfläche aufgebracht.

Typische Grundierungsformulierungen enthalten als wesentliche Formulierungsbestandteile:

| | |
|---|---|
| 10 bis 25 Gew.-% | erfindungsgemäße Kompositpartikel |
| 70 bis 85 Gew.-% | Wasser |
| 0,05 bis 1 Gew.-% | Netzmittel |
| 0,1 bis 1 Gew.-% | Entschäumer |

(fortgesetzt)

| | |
|---|---|
| 0,1 bis 3 Gew.-% | Bläueschutzmittel |
| 0,1 bis 2 Gew.-% | Assoziativ-Verdicker |
| 0 bis 4 Gew.-% | transparentes Eisenoxidpigment |
| 0 bis 5 Gew.-% | Filmbildehilfsmittel |
| 0,05 bis 5 Gew.-% | Base |

Typische Deckschichtformulierungen enthalten als wesentliche Formulierungsbestandteile:

| | |
|---|---|
| 20 bis 40 Gew.-% | erfindungsgemäße Kompositpartikel |
| 55 bis 75 Gew.-% | Wasser |
| 0,05 bis 1 Gew.-% | Netzmittel |
| 0,1 bis 1 Gew.-% | Entschäumer |
| 0,1 bis 3 Gew.-% | Bläueschutzmittel |
| 0,1 bis 2 Gew.-% | Assoziativ-Verdicker |
| 0 bis 4 Gew.-% | transparentes Eisenoxidpigment |
| 0 bis 5 Gew.-% | Filmbildehilfsmittel |
| 0,05 bis 5 Gew.-% | Base |

Typische Topcoatformulierungen enthalten als wesentliche Formulierungsbestandteile:

| | |
|---|---|
| 20 bis 40 Gew.-% | erfindungsgemäße Kompositpartikel |
| 55 bis 75 Gew.-% | Wasser |
| 0,05 bis 1 Gew.-% | Netzmittel |
| 0,1 bis 1 Gew.-% | Entschäumer |
| 0,1 bis 3 Gew.-% | Bläueschutzmittel |
| 0,1 bis 2 Gew.-% | Assoziativ-Verdicker |
| 0,1 bis 5 Gew.-% | UV-Absorber |
| 0 bis 5 Gew.-% | Filmbildehilfsmittel |
| 0,05 bis 5 Gew.-% | Base |

Zur Beschichtung von Formkörpern mit wenigstens einer Holzoberfläche werden häufig Klarlacke, Holzlasuren, Holzfarben oder Glanzlacke, welche erfindungsgemäße Kompositpartikel-Dispersionen enthalten, eingesetzt.

Typische Holzklarlacke enthalten als wesentliche Formulierungsbestandteile:

| | |
|---|---|
| 20 bis 40 Gew.-% | erfindungsgemäße Kompositpartikel |
| 55 bis 75 Gew.-% | Wasser |
| 0,05 bis 1 Gew.-% | Netzmittel |
| 0,1 bis 1 Gew.-% | Entschäumer |
| 0,1 bis 3 Gew.-% | Bläueschutzmittel |
| 0,1 bis 2 Gew.-% | Assoziativ-Verdicker |
| 0,1 bis 5 Gew.-% | UV-Absorber |
| 0 bis 5 Gew.-% | Filmbildehilfsmittel |
| 0,05 bis 5 Gew.-% | Base |

Typische Holzlasuren enthalten als wesentliche Formulierungsbestandteile:

| | |
|---|---|
| 20 bis 40 Gew.-% | erfindungsgemäße Kompositpartikel |
| 55 bis 75 Gew.-% | Wasser |
| 0,05 bis 1 Gew.-% | Netzmittel |
| 0,1 bis 1 Gew.-% | Entschäumer |
| 0,1 bis 3 Gew.-% | Bläueschutzmittel |

(fortgesetzt)

| | |
|---|---|
| 0,1 bis 2 Gew.-% | Assoziativ-Verdicker |
| 0 bis 4 Gew.-% | transparentes Eisenoxidpigment |
| 0 bis 5 Gew.-% | Filmbildehilfsmittel |
| 0,05 bis 5 Gew.-% | Base |

Typische Holzfarben enthalten als wesentliche Formulierungsbestandteile:

| | |
|---|---|
| 10 bis 30 Gew.-% | erfindungsgemäße Kompositpartikel |
| 25 bis 65 Gew.-% | Wasser |
| 0,05 bis 1 Gew.-% | Netzmittel |
| 0,1 bis 1 Gew.-% | Entschäumer |
| 0,1 bis 3 Gew.-% | Bläueschutzmittel |
| 0,1 bis 2 Gew.-% | Assoziativ-Verdicker |
| 0.1 bis 2 Gew.-% | Cellulose-Verdicker |
| 15 bis 30 Gew.-% | Weisspigment |
| 5 bis 15 Gew.-% | Füllstoff |
| 0 bis 5 Gew.-% | Filmbildehilfsmittel |
| 0,05 bis 5 Gew.-% | Base |

Typische Holzglanzlacke enthalten als wesentliche Formulierungsbestandteile:

| | |
|---|---|
| 15 bis 35 Gew.-% | erfindungsgemäße Kompositpartikel |
| 50 bis 75 Gew.-% | Wasser |
| 0,05 bis 1 Gew.-% | Netzmittel |
| 0,1 bis 1 Gew.-% | Entschäumer |
| 0,1 bis 3 Gew.-% | Bläueschutzmittel |
| 0,1 bis 2 Gew.-% | Assoziativ-Verdicker |
| 0,1 bis 2 Gew.-% | Cellulose-Verdicker |
| 5 bis 15 Gew.-% | Weisspigment |
| 0 bis 5 Gew.-% | Filmbildehilfsmittel |
| 0,05 bis 5 Gew.-% | Base |

Insbesondere bevorzugt werden die erfindungsgemässen wässrigen Kompositpartikel-Dispersionen in Holzlasuren auf Wasserbasis verwendet.

Die Erfindung wird anhand der nachfolgenden, nicht einschränkenden Beispiele näher erläutert.

Beispiele

1. Herstellung der wässrigen Kompositpartikel-Dispersionen Dn

In einem 2 l-Vierhalskolben, ausgerüstet mit einem Rückflusskühler, einem Thermometer, einem mechanischen Rührer sowie Dosiervorrichtungen, wurden bei 20 bis 25 °C (Raumtemperatur) und Atmosphärendruck unter Stickstoffatmosphäre und Rühren (200 Umdrehungen pro Minute) 416,6 g Nyacol® 2040 und daran anschließend ein Gemisch aus 2,5 g Methacrylsäure und 12 g einer 10 gew.-%igen wässrigen Lösung von Natriumhydroxid innerhalb von 5 Minuten zugegeben. Danach fügte man der gerührten Reaktionsmischung während 15 Minuten ein Gemisch aus 10,4 g einer 20 gew.-%igen wässrigen Lösung des nichtionischen Tensids Lutensol® AT 18 (Marke der BASF AG, $C_{16}C_{18}$-Fettalkoholethoxilat mit 18 Ethylenoxid-Einheiten) und 108,5 g entionisiertem Wasser zu. Daran anschließend wurde dem Reaktionsgemisch während 60 Minuten 0,83 g N-Cetyl-N,N,N-trimethylammoniumbromid (CTAB), gelöst in 200 g entionisiertem Wasser, zudosiert. Danach heizte man das Reaktionsgemisch auf eine Reaktionstemperatur von 80 °C auf.

Parallel stellte man als Zulauf 1 eine Monomerenmischung, bestehend aus X g Methylmethacrylat (MMA), Y g n-Butylacrylat (n-BA), Z g Glycidylmethacrylat (GMA) und 0,5 g Methacryloxypropyltrimethoxysilan (MEMO) [die jeweiligen Mengen sind in Tabelle 1 aufgelistet] sowie als Zulauf 2 eine Initiatorlösung, bestehend aus 2,5 g Natriumperoxodisulfat, 7 g einer 10 gew.-%igen wässrigen Lösung von Natriumhydroxid und 200 g entionisiertem Wasser, her.

Anschließend wurden der bei 80 °C gerührten Reaktionsmischung während 5 Minuten über zwei separate Zulaufleitungen 21,1 g von Zulauf 1 und 57,1 g von Zulauf 2 zugegeben. Danach rührte man die Reaktionsmischung eine Stunde bei Reaktionstemperatur.

Anschließend fügte man dem Reaktionsgemisch 0,92 g einer 45 gew.-%igen wässrigen Lösung von Dowfax® 2A1 zu. Innerhalb von 2 Stunden wurden nun zeitgleich beginnend die Restmengen von Zulauf 1 und Zulauf 2 dem Reaktionsgemisch kontinuierlich zudosiert. Danach wurde die Reaktionsmischung eine weitere Stunde bei Reaktionstemperatur gerührt und anschließend auf Raumtemperatur abgekühlt.

Von den so erhaltenen wässrigen Kompositpartikel-Dispersionen wurden die Feststoffgehalte FG bestimmt (siehe ebenfalls Tabelle 1). Die Feststoffgehalte wurden bestimmt, indem ca. 1 g der jeweiligen wässrigen Kompositpartikel- Dispersion in einem offenen Aluminiumtiegel mit einem Innendurchmesser von ca. 3 cm in einem Trockenschrank bei 150 °C bis zur Gewichtskonstanz getrocknet wurde. Zur Bestimmung der Feststoffgehalte wurden jeweils zwei separate Messungen durchgeführt. Die in der Tabelle 1 angegebenen Werten entsprechen den jeweiligen Mittelwerte dieser beiden Messungen.

Die Polymerisate der in den Beispielen erhaltenen Kompositpartikel wiesen eine Glasübergangstemperatur von < 5°C auf (DIN 53 765).

Die mittels der Methode der Analytischen Ultrazentrifuge bestimmten mittleren Teilchendurchmesser ($d_{50}$) der in den Beispielen D1 bis D5 sowie DV erhaltenen Kompositpartikel ist ebenfalls in Tabelle 1 angegeben.

Tabelle 1: Monomerenmengen und Eigenschaften der resultierenden Kompositpartikel-Dispersionen DV sowie D1 bis D5

| Dispersion Dn | X [g] n-BA | Y [g] MMA | Z [g] GMA | $d_{50}$ [nm] | FG [Gew.-%] |
|---|---|---|---|---|---|
| DV | 130,0 | 117,5 | 0 | 67 | 35,3 |
| D1 | 128,8 | 116,2 | 2,5 | 65 | 34,8 |
| D2 | 127,5 | 115,0 | 5,0 | 67 | 35,1 |
| D3 | 126,2 | 113,8 | 7,5 | 63 | 35,3 |
| D4 | 124,9 | 112,6 | 10,0 | 65 | 34,9 |
| D5 | 123,6 | 111,4 | 12,5 | 68 | 35,2 |

2. Herstellung der Holzlasuren unter Verwendung der Kompositpartikel-Dispersionen DV und D1 bis D5 sowie deren anwendungstechnische Eigenschaften

Aus den wässrigen Kompositpartikel-Dispersionen D1 bis D5 und DV wurden die entsprechenden Holzschutzlasuren HD1 bis HD5 und HDV durch Mischen der nachfolgenden Komponenten in der angegebenen Reihenfolge bei Raumtemperatur formuliert:

| | |
|---|---|
| 20,25 g | Wasser |
| 2,50 g | Mergal® S 96 (Fungizid und Algizid der Troy Chemie GmbH, Seelze.) |
| 0,25 g | Byk® 346 (Netzmittel der Byk Chemie GmbH, Wesel) |
| 0,50 g | Byk® 024 (Entschäumer der Byk Chemie GmbH, Wesel) |
| 0,25 g | AMP® 90 (Dispergierhilfsmittel, Angus Chemical Company, Buffalo Grove, USA) |
| 1,25 g | Rheoloate® 278 (Verdicker, Elementis Specialties Inc., Highstown, USA) |
| 7,50 g | Luconyl® Gelb (Pigmentpräparation der BASF AG) |
| 70,20 g | Kompositpartikel in Form ihrer wässrigen Dispersionen DV bzw. D1 bis D5 |
| 17,50 g | Wasser |

Zur Prüfung der Wasserpermeabilität der hergestellten Holzlasuren wurden Fichtenbretter mit einer Dicke von 2 cm, einer Breite von 10 cm und einer Länge von 30 cm auf einer Oberfläche (10 x 30 cm) folgendermaßen mit den vorgenannten Holzlasuren beschichtet:

a) Grundierung mit der jeweiligen Holzlasur HD1 bis HD5 und HDV, welche mit entionisiertem Wasser im Gewichtsverhältnis 1:1 verdünnt worden war; Auftragsmenge 40 g/$m^2$ (nass); 24 Stunden Trocknung bei 23 °C und 50 % rel. Luftfeuchtigkeit; anschließend Anschleifen der grundierten Holzoberfläche mit einem handelsüblichen Schleifpapier

der Körnung P 220; anschließend

b) Aufbringen des Deckanstrichs in Form der jeweiligen Holzlasur HD1 bis HD5 und HDV auf die grundierte Holzoberfläche; Auftragsmenge 80 g/$m^2$ (nass); 24 Stunden Trocknung bei 23 °C und 50 % rel. Luftfeuchtigkeit; anschließend Anschleifen der mit dem Deckanstrich beschichteten Holzoberfläche mit einem handelsüblichen Schleifpapier der Körnung P 220; anschließend

c) Aufbringen des Topcoats in Form der jeweiligen Holzlasur HD1 bis HD5 und HDV auf die mit dem Deckanstrich beschichtete Holzoberfläche; Auftragsmenge 80 g/$m^2$ (nass); 24 Stunden Trocknung bei 23 °C und 50 % rel. Luftfeuchtigkeit.

Dabei erfolgte die Grundierungs-, Deckanstrich- und Topcoat-Beschichtung jeweils auf Basis einer der Holzlasuren HD1 bis HD5 und HDV (d. h. für die Grundierungs-, Deckanstrich- und Topcoat-Beschichtung wurde eine Holzlasur verwendet).

Daran anschließend wurden die beschichteten Holzkörper für 3 Tage bei 50 °C im Trockenschrank getrocknet und anschließend für 24 Stunden bei Raumtemperatur gelagert. Die beschichteten Fichtenbretter wurden nun gewogen und anschließend mit der beschichteten Seite auf 10 x 8 x 8 cm große Steckschwämme (aus dem Floristik-Fachhandel) aufgelegt, die in einem Wasserreservoir lagerten und komplett mit Wasser durchtränkt waren. Es wurden jeweils Doppelbestimmungen in Anlehnung an DIN EN 927-5 durchgeführt. Die beschichteten Holzkörper wurden nach 24, 48 und 72 Stunden gewogen und über die Gewichtszunahme die Wasseraufnahme in Gramm pro Qadratmeter ermittelt. Die in Tabelle 2 angegenen Werte stellen die Mittelwerte aus den Doppelbestimmungen dar.

Tabelle 2: Wasseraufnahme [in g/$m^2$] der beschichteten Holzkörper in Abhängigkeit von der Zeit [in Stunden]

| Zeit // Holzlasur | HDV | HD1 | HD2 | HD3 | HD4 | HD5 |
|---|---|---|---|---|---|---|
| 24 | 754 | 566 | 463 | 438 | 434 | 435 |
| 48 | 1049 | 776 | 660 | 640 | 631 | 601 |
| 72 | 1186 | 926 | 796 | 770 | 668 | 665 |

Aus vorgenannter Tabelle ist klar ersichtlich, dass die mit den erfindungsgemässen Holzlasuren HD1 bis HD5 beschichteten Holzköper eine deutlich geringere Wasseraufnahme zeigen als die mit der Vergleichslasur HDV beschichteten Holzformkörper. Die vorgenannte Reduktion der Wasseraufnahme (bedingt durch die verringerte Wasserpermeabilität der Holzbeschichtung) spiegelt sich auch in einer verbesserten Freibewitterungsstabilität der beschichteten Holzköper, insbesondere durch einen deutlich geringeren Bewuchs mit Bläuepilz wieder.

## Patentansprüche

1. Verwendung einer wässrigen Dispersion von aus Polymerisat und feinteiligem anorganischem Feststoff aufgebauten Partikeln (wässrige Kompositpartikel-Dispersion) als Bindemittel in Holzbeschichtungsformulierungen, wobei bei der Herstellung der wässrigen Kompositpartikel-Dispersion ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes mit einem mittleren Teilchendurchmesser ≤ 100 nm und wenigstens eines Dispergiermittels nach der Methode der radikalisch wässrigen Emulsionspolymerisation polymerisiert werden, und wobei als ethylenisch ungesättigte Monomere eine Monomerenmischung eingesetzt wird, welche aus ethylenisch ungesättigten Monomeren A und zu > 0 und ≤ 10 Gew.-% wenigstens eines, eine Epoxidgruppe aufweisenden ethylenisch ungesättigten Monomeren B (Epoxidmonomer) besteht.

2. Verwendung nach Anspruch 1, wobei der feinteilige anorganische Feststoff ausgewählt ist aus der Gruppe umfassend Siliziumdioxid, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinn-(IV)-oxid, Cer-(IV)-oxid, Yttrium-(III)-oxid, Titandioxid, Hydroxylapatit, Zinkoxid und Zinksulfid.

3. Verwendung nach einem der Ansprüche 1 oder 2, wobei es sich bei dem feinteiligen anorganischen Feststoff um pyrogene und/oder kolloidale Kieselsäure, ein Siliziumdioxid-Sol und/oder ein Schichtsilikat handelt.

4. Verwendung nach einem der Ansprüche 1 bis 3, wobei als Epoxidmonomer Glycidylacrylat und/oder Glycidylmethacrylat eingesetzt wird.

**5.** Verwendung nach einem der Ansprüche 1 bis 4, wobei die Monomerenmischung 0,01 bis 5 Gew.-%, bezogen auf die Gesamtmenge der Monomeren A, ethylenisch ungesättigte Monomere enthält, welche eine Siloxangruppe aufweisen.

**6.** Verwendung nach einem der Ansprüche 1 bis 5, **dadurch gekennzeichnet, dass** die Gesamtmenge des wenigstens einen Epoxidmonomeren in der Monomerenmischung 0,1 bis 5 Gew.-% beträgt.

**7.** Verwendung nach einem der Ansprüche 1 bis 6, wobei die Zusammensetzung der Monomeren A so gewählt wird, dass nach deren alleiniger Polymerisation ein Polymerisat resultieren würde, dessen Glasübergangstemperatur ≤ 60 °C beträgt.

**8.** Verfahren zur Beschichtung von Formkörpern mit wenigstens einer Holzoberfläche, **dadurch gekennzeichnet, dass** die Holzoberfläche mit 50 bis 500 g/$m^2$ einer Holzbeschichtungsformulierung, enthaltend eine wässrige Kompositpartikel-Dispersion, wobei bei der Herstellung der wässrigen Kompositpartikel-Dispersion ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes mit einem mittleren Teilchendurchmesser ≤ 100 nm und wenigstens eines Dispergiermittels nach der Methode der radikalisch wässrigen Emulsionspolymerisation polymerisiert werden, und wobei als ethylenisch ungesättigte Monomere eine Monomerenmischung eingesetzt wird, welche aus ethylenisch ungesättigten Monomeren A und zu > 0 und ≤ 10 Gew.-% wenigstens eines, eine Epoxidgruppe aufweisenden ethylenisch ungesättigten Monomeren B (Epoxidmonomer) besteht (als Feststoff gerechnet), beschichtet und anschließend getrocknet wird.

**9.** Formkörper erhältlich nach einem Verfahren gemäß Anspruch 8.

**Claims**

**1.** The use of an aqueous dispersion of particles composed of polymer and finely divided inorganic solid (aqueous composite particle dispersion) as a binder in wood-coating formulations, in the preparation of the aqueous composite particle dispersion ethylenically unsaturated monomers being dispersed in an aqueous medium and polymerized by means of at least one free radical polymerization initiator in the presence of at least one dispersed, finely divided inorganic solid having a median particle diameter of ≤ 100 nm and at least one dispersant by the free radical aqueous emulsion polymerization method, and the ethylenically unsaturated monomers used being a monomer mixture which consists of ethylenically unsaturated monomers A and > 0 and ≤ 10% by weight of at least one ethylenically unsaturated monomer B having an epoxide group (epoxide monomer).

**2.** The use according to claim 1, the finely divided inorganic solid being selected from the group consisting of silica, alumina, hydroxyaluminum oxide, calcium carbonate, magnesium carbonate, calcium orthophosphate, magnesium orthophosphate, iron(II) oxide, iron(III) oxide, iron(II/III) oxide, tin(IV) oxide, cerium(IV) oxide, yttrium(III) oxide, titanium dioxide, hydroxylapatite, zinc oxide and zinc sulfide.

**3.** The use according to either of claims 1 and 2, the finely divided inorganic solid being pyrogenic and/or colloidal silica, a silica sol and/or a sheet silicate.

**4.** The use according to any of claims 1 to 3, the epoxide monomer used being glycidyl acrylate and/or glycidyl methacrylate.

**5.** The use according to any of claims 1 to 4, the monomer mixture comprising from 0.01 to 5% by weight, based on the total amount of the monomers A, of ethylenically unsaturated monomers which have a siloxane group.

**6.** The use according to any of claims 1 to 5, wherein the total amount of the at least one epoxide monomer in the monomer mixture is from 0.1 to 5% by weight.

**7.** The use according to any of claims 1 to 6, the composition of the monomers A being chosen so that, after polymerization of them alone, a polymer whose glass transition temperature is ≤ 60°C would result.

**8.** A method for coating moldings having at least one wood surface, wherein the wood surface is coated with from 50 to 500 g/$m^2$ of a wood-coating formulation comprising an aqueous composite particle dispersion, in the preparation

of the aqueous composite particle dispersion ethylenically unsaturated monomers being dispersed in an aqueous medium and polymerized by means of at least one free radical polymerization initiator in the presence of at least one dispersed, finely divided inorganic solid having a median particle diameter of ≤ 100 nm and at least one dispersant by the free radical aqueous emulsion polymerization method, and the ethylenically unsaturated monomers used being a monomer mixture which consists of ethylenically unsaturated monomers A and > 0 and ≤ 10% by weight of at least one ethylenically unsaturated monomer B having an epoxide group (epoxide monomer) (calculated as solid) and then dried.

**9.** A molding obtainable by a method according to claim 8.

**Revendications**

**1.** Utilisation d'une dispersion aqueuse de particules constituées de polymère et de matière solide inorganique finement divisée (dispersion aqueuse de particules composite) en tant que liant dans des compositions de revêtement de bois, dans la préparation de la dispersion aqueuse de particules composites des monomères à insaturation éthylénique étant dispersés en milieu aqueux et polymérisés selon la méthode de la polymérisation radicalaire en émulsion aqueuse au moyen d'au moins un amorceur de polymérisation radicalaire en présence d'au moins une matière solide inorganique finement divisée, dispersée, ayant un diamètre moyen de particule ≤ 100 nm et d'au moins un dispersant, et en utilisant comme monomères à insaturation éthylénique un mélange de monomères qui consiste en des monomères A à insaturation éthylénique et, à raison de > 0 et ≤ 10 % en poids, en au moins un monomère B à insaturation éthylénique comportant un groupe époxy (monomère époxyde).

**2.** Utilisation selon la revendication 1, dans laquelle la matière solide inorganique finement divisée est choisie dans le groupe comprenant le dioxyde de silicium, l'oxyde d'aluminium, l'oxyde d'hydroxyaluminium, le carbonate de calcium, le carbonate de magnésium, l'orthophosphate de calcium, l'orthophosphate de magnésium, l'oxyde de fer-(II), l'oxyde de fer-(III), l'oxyde de fer-(II/III), l'oxyde d'étain-(IV), l'oxyde de cérium-(IV), l'oxyde d'yttrium-(III), le dioxyde de titane, l'hydroxyapatite, l'oxyde de zinc et le sulfure de zinc.

**3.** Utilisation selon la revendication 1 ou 2, dans laquelle la matière solide inorganique finement divisée consiste en acide silicique pyrogéné et/ou colloïdal, en un sol de dioxyde de silicium et/ou un silicate lamellaire.

**4.** Utilisation selon l'une quelconque des revendications 1 à 3, dans laquelle on utilise comme monomère époxyde l'acrylate de glycidyle et/ou le méthacrylate de glycidyle.

**5.** Utilisation selon l'une quelconque des revendications 1 à 4, dans laquelle le mélange de monomères contient de 0,01 à 5 % en poids, par rapport à la quantité totale des monomères A, des monomères à insaturation éthylénique qui comportent un groupe siloxane.

**6.** Utilisation selon l'une quelconque des revendications 1 à 5, **caractérisée en ce que** la quantité totale dudit au moins un monomère époxyde dans le mélange de monomères vaut de 0,1 à 5 % en poids.

**7.** Utilisation selon l'une quelconque des revendications 1 à 6, dans laquelle la composition des monomères A est choisie de manière qu'après la polymérisation de ces monomères seuls il en résulterait un polymère dont la température de transition vitreuse serait ≤ 60°C.

**8.** Procédé pour le revêtement de corps moulés présentant au moins une surface de bois, **caractérisé en ce qu'**on enduit la surface de bois avec 50 à 500 g/$m^2$ d'une composition de revêtement de bois, contenant une dispersion aqueuse de particules composites, dans la préparation de la dispersion aqueuse de particules composites des monomères à insaturation éthylénique étant dispersés en milieu aqueux et polymérisés selon la méthode de la polymérisation radicalaire en émulsion aqueuse au moyen d'au moins un amorceur de polymérisation radicalaire en présence d'au moins une matière solide inorganique finement divisée, dispersée, ayant un diamètre moyen de particule ≤ 100 nm et d'au moins un dispersant, et en utilisant comme monomères à insaturation éthylénique un mélange de monomères qui consiste en des monomères A à insaturation éthylénique et, à raison de > 0 et ≤ 10 % en poids, en au moins un monomère B à insaturation éthylénique comportant un groupe époxy (monomère époxyde) (calculé en tant que matière solide) et ensuite on la sèche.

**9.** Corps moulé pouvant être obtenu conformément à un procédé selon la revendication 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3544500 A
- US 4421660 A
- US 4608401 A
- US 4981882 A
- EP 104498 A
- EP 505230 A
- EP 572128 A
- GB 2227739 A
- WO 0118081 A
- WO 0129106 A
- WO 03000760 A
- DE 10200500918
- US 4269749 A
- US 5763629 A


### In der Beschreibung aufgeführte Nicht-Patentliteratur


- **J. Leuninger et al.** *Farbe & Lack,* 2004, vol. 110 (10), 30-38
- **Long et al.** *Tianjin Daxue Xuebao,* 1991, vol. 4, 10-15
- **Bourgeat-Lami et al.** *Die Angewandte Makromolekulare Chemie,* 1996, vol. 242, 105-122
- **Paulke et al.** Synthesis Studies of Paramagnetic Polystyrene Latex Particles in Scientific and Clinical Applications of Magnetic Carriers. Plenum Press, 1997, 69-76
- **Armes et al.** *Advanced Materials,* 1999, vol. 11 (5), 408-410
- **S. E. Harding et al.** Analytical Ultracentrifugation in Biochemistry and Polymer Science. Royal Society of Chemistry, 1992
- **W. Mächtle.** Analysis of Polymer Dispersions with an Eight-Cell-AUC-Multiplexer: High Resolution Particle Size Distribution and Density Gradient Techniques. 147-175
- **B. R. J. Hunter.** Introduction to modern Colloid Science. Oxford University Press, 1993, 241-248
- **K. Oka ; K. Furusawa.** Electrical Phenomena at Interfaces, Surfactant Science Series. Marcel Dekker, 1998, vol. 76, 151-232
- **B. B. R. Ware ; W. H. Flygare.** *Chem. Phys. Lett.,* 1971, vol. 12, 81-85
- **E. Matijevic.** *Chem. Mater.,* 1993, vol. 5, 412-426
- Ullmann's Encyclopedia of Industrial Chemistry. Verlag Chemie, 1992, vol. A 23, 583-660
- **D. F. Evans ; H. Wennerström.** The Colloidal Domain. Verlag Chemie, 1994, 363-405
- **R. J. Hunter.** Foundations of Colloid Science. Clarendon Press, 1991, vol. I, 10-17
- **Houben-Weyl.** Methoden der organischen Chemie, Band XIV/1, Makromolekulare Stoffe. Georg-Thieme-Verlag, 1961, vol. XIV-1, 411-420
- **Houben-Weyl.** Methoden der organischen Chemie, Band XIV/1, Makromolekulare Stoffe. Georg-Thieme-Verlag, 1961, vol. XIV-1, 192-208
- **H. Stache.** Tensid-Taschenbuch. Carl-Hanser-Verlag, 1981
- **McCutcheon's.** Emulsifiers & Detergents. MC Publishing Company, 1989
- **T. G. Fox.** *Bull. Am. Phys. Soc.,* 1956, vol. 1 (II), 123
- Ullmann's Encyclopädie der technischen Chemie. Verlag Chemie, 1980, vol. 19, 18
- Ullmann's Encyclopedia of Industrial Chemistry. Verlag Chemie, 1992, vol. A21, 169
- **B. J. Brandrup ; E. H. Immergut.** Polymer Handbook. J. Wiley, 1966
- POLYMER HANDBOOK. J. Wiley, 1975
- POLYMER HANDBOOK. J. Wiley, 1989
- **J. Brandrup ; E.H. Immergut.** Polymerhandbook. John Wiley & Sons, 1989, 133-141